# DEMANDE DE BREVET EUROPEEN

(11) **EP 1 852 309 A1**
(43) Date de publication de la demande: **07.11.2007**
(21) Numéro de dépôt: 07107370.4
(22) Date de dépôt: 02.05.2007
(51) Int. Cl.: B60R 5/04

(54) **Dispositif cache-bagages pour véhicule automobile, à ouverture partielle automatique, et véhicule automobile correspondant.**

(30) Priorité: 02.05.2006 FR 0603911
(71) Demandeur: WAGON SAS, 79302 Bressuire Cédex (FR)
(72) Inventeur: Devanne, Christophe, 79300 Chambroutet (FR); Sandrin, Xavier, 79300 Bressuire (FR)
(74) Mandataire: Bioret, Ludovic

(57) **Abrégé**

L'invention concerne un dispositif cache-bagages pour coffre de véhicule automobile, comprenant une toile d'occultation (13, 21) dont une première extrémité est solidaire d'un tube enrouleur (14) équipé de moyens de rappel tendant à ramener ladite toile d'occultation dans une position repliée, enroulée sur ledit tube enrouleur (14), et une seconde extrémité est solidaire d'une barre de tirage (12, 23) coulissant dans deux rails de guidage montés sur les bords latéraux dudit coffre. Ladite barre de tirage (12, 23) comprend des premiers moyens de verrouillage (121, 241) de ladite toile d'occultation (13, 21) dans au moins deux positions déployées prédéfinies, une position de toile complètement déployée et au moins une position de toile partiellement déployée, lesdits premiers moyens de verrouillage (121, 241) coopérant avec des seconds moyens de verrouillage (111, 113, 45, 46) prévus à cet effet dans chacun desdits rails pour chacune desdites positions déployées prédéfinies, et des moyens de libération desdits premiers moyens de verrouillage (121, 241). L'actionnement desdits moyens de libération entraînent le repli de ladite toile d'occultation (13, 21) jusqu'à la première position de toile partiellement déployée rencontrée, si elle existe, et le verrouillage desdits premiers moyens de verrouillage (121, 241) avec les seconds moyens de verrouillage (113, 45, 46) de ladite position de toile partiellement déployée rencontrée.

## Description

### 1. Domaine de l'invention

Le domaine de l'invention est celui de l'équipement intérieur des véhicules automobiles. Plus précisément, l'invention concerne les cache-bagages destinés à occulter au moins une partie d'un coffre d'un véhicule automobile.

### 2. Solutions de l'art antérieur

On connaît de nombreuses solutions de cache-bagages pour véhicules automobiles. Ces cache-bagages peuvent notamment être réalisés à l'aide d'une toile d'occultation. Cette toile peut être montée sur un tube enrouleur de façon à se déployer ou s'enrouler selon les besoins. Une cassette contenant le tube enrouleur est le plus souvent fixée au fond du coffre, sur ou à proximité du dossier de la banquette arrière du véhicule. La toile est ensuite déployée pour recouvrir la totalité du coffre du véhicule.

Selon cette approche, quand la toile du cache-bagages est repliée, l'utilisateur, pour la déployer, doit aller saisir une barre de tirage qui se trouve au niveau de la cassette, c'est-à-dire au fond du coffre, au niveau de la banquette arrière. Il est particulièrement malaisé de se pencher pour attraper cette barre de tirage, notamment quand le coffre est de dimension importante. Le déploiement d'un tel cache-bagages est donc une opération inconfortable pour l'utilisateur, particulièrement les utilisateurs de petite taille ou les utilisateurs ayant des difficultés à se pencher.

Par ailleurs, l'ouverture d'un tel cache-bagages n'est généralement pas aisée. L'utilisateur doit en effet repousser la toile, ce qui n'est pas toujours facile, notamment lorsque l'utilisateur est chargé.

On peut bien sûr envisager de pallier cet inconvénient en équipant la toile d'un enrouleur puissant, tendant à ramener la toile dans la position d'ouverture du cache-bagages. On se retrouve alors dans la position décrite précédemment, dans laquelle la barre de tirage est difficile à atteindre. Pourtant, dans de nombreux cas, il n'est pas nécessaire d'ouvrir complètement le cache-bagages, et l'utilisateur peut au contraire souhaiter une certaine discrétion sur une partie de son coffre.

### 3. Objectifs de l'invention

L'invention a notamment pour objectif de pallier ces inconvénients de l'art antérieur.

Plus précisément, un objectif de l'invention est de fournir un dispositif cache-bagages simple et efficace pour véhicule automobile, notamment, pour l'ouverture de celui-ci, notamment lorsque l'utilisateur est chargé.

Un autre objectif de l'invention est de fournir un tel dispositif permettant d'éviter à l'utilisateur de devoir toujours se pencher pour attraper la barre de tirage au fond du coffre lorsque le cache-bagages est replié.

En d'autres termes, un objectif de l'invention est de fournir une technique permettant d'optimiser l'ouverture et la fermeture du cache-bagages, en fonction des besoins.

### 4. Exposé de l'invention

Ces objectifs, ainsi que d'autres qui apparaîtront plus clairement par la suite, sont atteints à l'aide d'un dispositif cache-bagages pour coffre de véhicule automobile, comprenant une toile d'occultation dont une première extrémité est solidaire d'un tube enrouleur équipé de moyens de rappel tendant à ramener ladite toile d'occultation dans une position repliée, enroulée sur ledit tube enrouleur, et une seconde extrémité est solidaire d'une barre de tirage coulissant dans deux rails de guidage montés sur les bords latéraux dudit coffre.

Selon l'invention, ladite barre de tirage comprend des premiers moyens de verrouillage de ladite toile d'occultation dans au moins deux positions déployées prédéfinies, une position de toile complètement déployée et au moins une position de toile partiellement déployée, lesdits premiers moyens de verrouillage coopérant avec des seconds moyens de verrouillage prévus à cet effet dans chacun desdits rails pour chacune desdites positions déployées prédéfinies, et des moyens de libération desdits premiers moyens de verrouillage.

Toujours selon l'invention, l'actionnement desdits moyens de libération entraînent le repli de ladite toile d'occultation jusqu'à la première position de toile partiellement déployée rencontrée, si elle existe, et le verrouillage desdits premiers moyens de verrouillage avec les seconds moyens de verrouillage de ladite position de toile partiellement déployée rencontrée.

Ainsi, l'ouverture du cache-bagages se fait par au moins deux étapes successives, au moins une position d'ouverture intermédiaire permettant de ne dégager qu'une partie du coffre, et facilitant la fermeture, puisque la barre de tirage est restée en position intermédiaire, et qu'il n'est pas nécessaire de se pencher dans le coffre pour l'attraper.

Le passage d'une position prédéterminée à une autre, en ouverture, se fait par une simple action, ce qui est pratique, en particulier pour un utilisateur chargé.

Avantageusement, des moyens de ralentissement du repli de ladite toile d'occultation, s'opposant à la force appliquée sur ladite toile d'occultation par lesdits moyens de rappel, sont prévus.

En effet, sinon, la toile à tendance à se replier très rapidement, ce qui peut être dangereux, générateur de chocs et de bruits, et donner une impression de faible qualité.

Le ralentissement peut être réalisé au niveau de la barre de tirage (frottement, crémaillère,...), de la toile et/ou du tube enrouleur (roue montée dans un bain de graisse par exemple).

Selon un premier mode de réalisation de l'invention, lesdits seconds moyens de verrouillage comprennent, à chacune desdites positions déployées prédéfinies une encoche formée dans la partie inférieure de chacun desdits rails, et en ce que lesdits premiers moyens de verrouillage comprennent une butée à chaque extrémité de ladite barre de tirage, venant se loger dans lesdites encoches.

On dispose ainsi d'un système simple à mettre en oeuvre, et efficace.

Avantageusement, dans ce cas, lesdits rails comprennent un chemin de guidage amenant lesdits premiers moyens de verrouillage en contact avec lesdits seconds moyens de verrouillage.

De façon préférentielle, lesdits moyens de libération comprennent des moyens permettant un basculement de ladite barre de tirage, de façon qu'un appui sur celle-ci entraîne un déverrouillage.

Ainsi, l'actionnement du déverrouillage est aisé, même lorsque l'utilisateur est chargé. Il lui suffit en effet d'appuyer en une zone quelconque de la barre de tirage.

Selon un autre mode de réalisation de l'invention, lesdits seconds moyens de verrouillage comprennent des encoches formées dans le fond de chacun desdits rails, et en ce que lesdits premiers moyens de verrouillage comprennent deux pênes coopérant avec lesdites encoches, et montés à chacune des extrémités de ladite barre de tirage.

Dans ce cas, lesdits moyens de libération comprennent avantageusement une poignée de déverrouillage mobile en rotation autour d'un axe sensiblement vertical, et montée à une extrémité de ladite barre de tirage.

Selon un mode de réalisation particulier, ladite poignée agit directement sur un premier desdits pênes, et par l'intermédiaire de moyens de liaison sur le second desdits pênes.

Lesdits moyens de liaison peuvent alors comprendre une came, entraînée en rotation par ladite poignée et deux tringles reliant ladite came audit second pêne.

L'invention concerne également un véhicule automobile équipé d'un dispositif cache-bagages tel que décrit ci-dessus.

### 5. Liste des figures

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés parmi lesquels :
- la figure 1 illustre de façon schématique, en coupe, un premier mode de réalisation de l'invention ;
- la figure 2 est une vue partielle d'un dispositif cache-bagages selon un deuxième mode de réalisation de l'invention ;
- la figure 3 présente plus précisément les moyens de verrouillage du dispositif de la figure 2 ;
- la figure 4 illustre schématiquement des moyens d'équilibrage du dispositif de la figure 2.

### 6. Description de deux modes de réalisation

### 6.1 Premier mode de réalisation

L'invention propose donc de mettre en oeuvre un cache-bagages qui soit facile à ouvrir, mais qui ne s'ouvre pas systématiquement complètement, une ou plusieurs positions intermédiaires d'ouverture étant prévues.

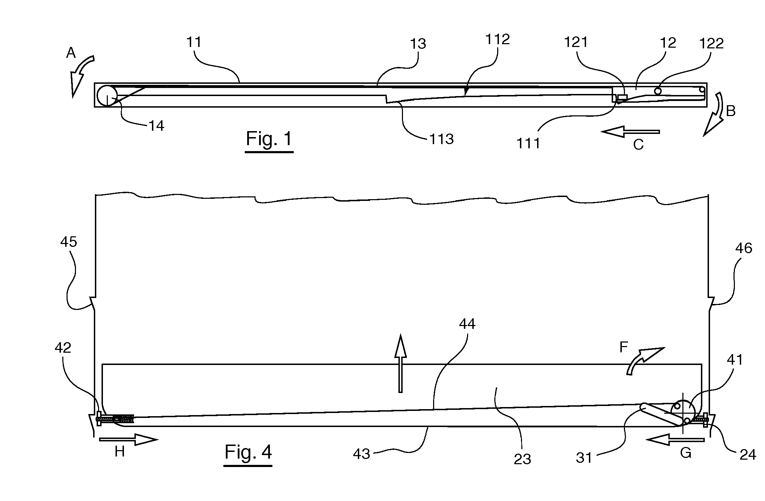

La figure illustre un premier mode de réalisation de cette approche, en coupe. Plus précisément, la figure 1 illustre un rail de guidage 11, monté dans la paroi latérale (non représentée) du coffre d'un véhicule, et assurant le guidage d'une barre de tirage 12, reliée à l'une des extrémités d'une toile d'occultation 13, dont l'autre extrémité est solidaire d'un tube enrouleur 14, muni de moyens de rappel (non représentés) imprimant à la toile 13 une traction selon la flèche A.

Sur cette figure 1, la toile est dans sa position déployée, assurant l'occultation du coffre. Dans cette position, la barre de tirage, encore appelée palette, 12 est retenue par la coopération d'un élément 121 prévu à cet effet sur la barre de tirage 12 et formant une butée, en coopération avec une encoche 111 formée dans le rail 11. Bien sûr, l'autre rail, de l'autre côté du coffre, comprend une encoche similaire, coopérant avec un deuxième élément de butée.

La palette 12 est conçue de façon que, sous l'action de la force de rappel du tube enrouleur et de l'encoche 111, elle se maintienne sensiblement horizontale. Sa forme, et son épaisseur, lui permettent cependant de basculer, selon un axe 122, lorsque l'on effectue un appui sur l'extrémité opposée à la butée. Sous l'effet de cet appui, qui peut être effectué à la main à n'importe quel emplacement sur la longueur de la palette, la palette bascule comme illustré par la flèche B, ce qui entraîne la libération de l'élément de butée 121, qui est dégagé de l'encoche 111. Sous l'effet du rappel, la toile s'enroule autour du tube 14 et entraîne la palette 12 comme illustré par la flèche C.

Cette palette 12 est guidée par le chemin de guidage 112 défini dans le rail 11, qui amène l'élément de butée 121 en contact avec une nouvelle encoche 113, qui immobilise la barre de tirage 12 dans une position d'ouverture intermédiaire.

Ainsi, selon l'invention, avec un simple appui sur la palette, l'utilisateur a pu obtenir une ouverture du cache-bagages. Cependant, cette ouverture n'est que partielle, ce qui est la plupart du temps suffisant pour accéder, poser ou retirer des bagages. Ceci permet en outre de conserver dissimulés les objets placés au fond du coffre. Enfin, ainsi, l'utilisateur peut aisément refermer le cache-bagages, la barre de tirage 12 n'étant pas trop éloignée, et notamment pas complètement ré-enroulée jusqu'au fond du coffre.

Bien sûr, on peut aisément ouvrir complètement le cache-bagages en effectuant un nouvel appui sur la palette 12.

Bien qu'une seule encoche intermédiaire 113 soit illustrée, on comprend aisément que plusieurs encoches de ce style peuvent être ajoutées, pour définir plusieurs positions intermédiaires d'ouverture.D

### 6.2 Deuxième mode de réalisation

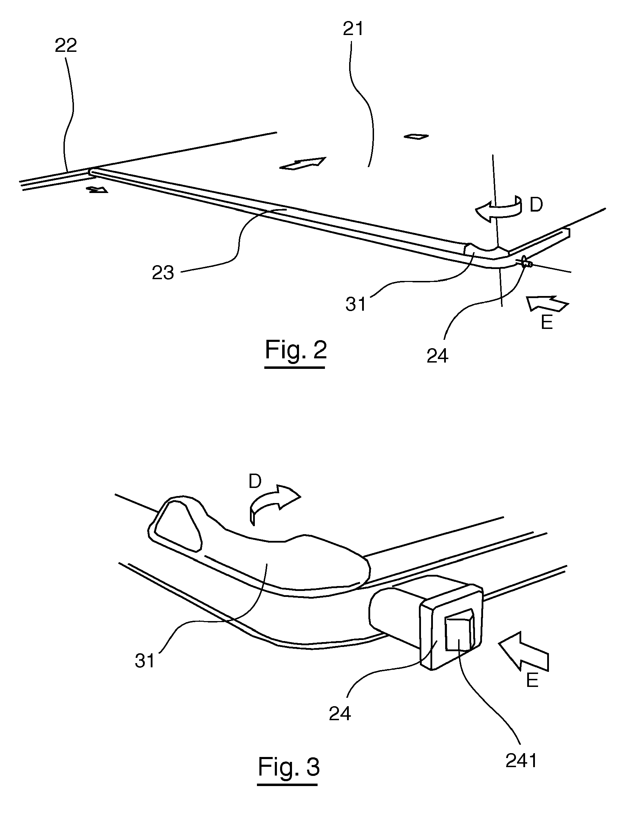

Selon un deuxième mode de réalisation, illustré par la figure 2, le maintien en position ouverte (totale ou intermédiaire) est assuré par un mécanisme à base de pênes et de gâches.

Sur la figure 2, on a représenté une partie de la toile d'occultation 21 du cache-bagages, en position déployée. On a également représenté un des rails de coulissement 22, dans lequel se déplace une des extrémités de la barre de tirage 23. Le deuxième rail n'a pas été représenté, pour permettre de distinguer le pêne 24 des moyens de verrouillage. Un second pêne est bien sûr prévu pour coopérer avec le rail 23, dans lequel sont ménagées des gâches aux différentes positions d'ouverture.

Comme cela apparaît plus précisément sur la vue agrandie de la figure 3, le pêne comprend deux plans inclinés 241 facilitant le guidage du pêne dans chacune des gâches. Classiquement, le pêne coopère avec des moyens de rappel (non représentés) tendant à l'éloigner de la barre de tirage, de façon qu'il prenne par défaut une position de verrouillage, dans laquelle il coopère avec l'une des gâches.

Une poignée 31 est montée à l'une des extrémités de la barre de tirage 23, pour agir sur le pêne 24. Cette poignée est mobile en rotation, selon un axe perpendiculaire au plan défini par la toile d'occultation. En actionnant cette poignée 31 dans le sens illustré par la flèche D, on obtient classiquement le retrait du pêne 24 (flèche E).

Cette poignée 31, bien que montée à proximité de l'un des pênes, agit également sur celui monté à l'autre extrémité de la barre de tirage. Pour cela, on prévoit un mécanisme de commande déporté, tel que celui illustré par la figure 4.

Ainsi, la poignée 31 agit d'une part directement sur le pêne 24, et simultanément sur une came 41, qui est reliée au deuxième pêne 42, par l'intermédiaire de deux tringles 43 et 44.

Le déplacement de la poignée 31 dans le sens de la flèche F va donc entraîner le déverrouillage des deux pênes (flèches G et H) la barre de tirage 23 est alors libérée, et va donc revenir vers l'enrouleur, comme illustré par la flèche I.

La toile d'occultation ne sera cependant pas complètement ré-enroulée.

En effet, la barre de tirage sera arrêtée dans une position intermédiaire, par les gâches 45 et 46, qui définissent une position d'arrêt intermédiaire, de même que dans le premier mode de réalisation décrit.

On notera d'ailleurs que, comme illustré sur cette figure 4, les gâches ne sont pas ici des gâches classiques, mais de simples encoches, coopérant avec les pênes, de façon similaire à la technique du premier mode réalisation.

A nouveau, plusieurs encoches peuvent être prévues pour définir plusieurs positions d'ouverture intermédiaire. De même que précédemment, une nouvelle action sur la poignée suffit pour obtenir le repli complet de la toile, ou le passage à la position intermédiaire suivante.

## Revendications

1. Dispositif cache-bagages pour coffre de véhicule automobile, comprenant une toile d'occultation (13, 21) dont une première extrémité est solidaire d'un tube enrouleur (14) équipé de moyens de rappel tendant à ramener ladite toile d'occultation dans une position repliée, enroulée sur ledit tube enrouleur (14), et une seconde extrémité est solidaire d'une barre de tirage (12, 23) coulissant dans deux rails de guidage montés sur les bords latéraux dudit coffre,
**caractérisé en ce que** ladite barre de tirage (12, 23) comprend des premiers moyens de verrouillage (121, 241) de ladite toile d'occultation (13, 21) dans au moins deux positions déployées prédéfinies, une position de toile complètement déployée et au moins une position de toile partiellement déployée, lesdits premiers moyens de verrouillage (121, 241) coopérant avec des seconds moyens de verrouillage (111, 113, 45, 46) prévus à cet effet dans chacun desdits rails pour chacune desdites positions déployées prédéfinies, et des moyens de libération desdits premiers moyens de verrouillage (121, 241),
et **en ce que** l'actionnement desdits moyens de libération entraînent le repli de ladite toile d'occultation (13, 21) jusqu'à la première position de toile partiellement déployée rencontrée, si elle existe, et le verrouillage desdits premiers moyens de verrouillage (121, 241) avec les seconds moyens de verrouillage (113, 45, 46) de ladite position de toile partiellement déployée rencontrée.

2. Dispositif cache-bagages selon la revendication 1, **caractérisé en ce qu'**il comprend des moyens de ralentissement du repli de ladite toile d'occultation (13, 21), s'opposant à la force appliquée sur ladite toile d'occultation (13, 21) par lesdits moyens de rappel.

3. Dispositif cache-bagages selon l'une quelconque des revendications 1 et 2,
**caractérisé en ce que** lesdits seconds moyens de verrouillage (111, 113, 45, 46) comprennent, à chacune desdites positions déployées prédéfinies une encoche formée dans la partie inférieure de chacun desdits rails, et **en ce que** lesdits premiers moyens de verrouillage (121, 241) comprennent une butée à chaque extrémité de ladite barre de tirage (12, 23), venant se loger dans lesdites encoches.

4. Dispositif cache-bagages selon la revendication 3, **caractérisé en ce que** lesdits rails comprennent un chemin de guidage amenant lesdits premiers moyens de verrouillage (121, 241) en contact avec lesdits seconds moyens de verrouillage (111, 113, 45, 46).

5. Dispositif cache-bagages selon l'une quelconque des revendications 3 et 4, **caractérisé en ce que** lesdits moyens de libération comprennent des moyens permettant un basculement de ladite barre de tirage (12, 23), de façon qu'un appui sur celle-ci entraîne un déverrouillage.

6. Dispositif cache-bagages selon l'une quelconque des revendications 1 et 2, **caractérisé en ce que** lesdits seconds moyens de verrouillage (111, 113, 45, 46) comprennent des encoches formées dans le fond de chacun desdits rails, et **en ce que** lesdits premiers moyens de verrouillage (121, 241) comprennent deux pênes coopérant avec lesdites encoches, et montés à chacune des extrémités de ladite barre de tirage (12, 23).

7. Dispositif cache-bagages selon la revendication 6, **caractérisé en ce que** lesdits moyens de libération comprennent une poignée de déverrouillage (31) mobile en rotation autour d'un axe sensiblement vertical, et montée à une extrémité de ladite barre de tirage.

8. Dispositif cache-bagages selon la revendication 7, **caractérisé en ce que** ladite poignée agit directement sur un premier desdits pênes, et par l'intermédiaire de moyens de liaison sur le second desdits pênes.

9. Dispositif cache-bagages selon la revendication 8, **caractérisé en ce que** lesdits moyens de liaison comprennent une came, entraînée en rotation par ladite poignée et deux tringles reliant ladite came audit second pêne.

10. Véhicule automobile **caractérisé en ce qu'**il comprend un dispositif cache-bagages, comprenant une toile d'occultation dont une première extrémité est solidaire d'un tube enrouleur équipé de moyens de rappel tendant à ramener ladite toile d'occultation dans une position repliée, enroulée sur ledit tube enrouleur, et une seconde extrémité est solidaire d'une barre de tirage coulissant dans deux rails de guidage montés sur les bords latéraux dudit coffre,
**caractérisé en ce que** ladite barre de tirage comprend des premiers moyens de verrouillage de ladite toile d'occultation dans au moins deux positions déployées prédéfinies, une position de toile complètement déployée et au moins une position de toile partiellement déployée, lesdits premiers moyens de verrouillage coopérant avec des seconds moyens de verrouillage prévus à cet effet dans chacun desdits rails pour chacune desdites positions déployées prédéfinies, et des moyens de libération desdits premiers moyens de verrouillage,
et **en ce que** l'actionnement desdits moyens de libération entraînent le repli de ladite toile d'occultation jusqu'à la première position de toile partiellement déployée rencontrée, si elle existe, et le verrouillage desdits premiers moyens de verrouillage avec les seconds moyens de verrouillage de ladite position de toile partiellement déployée rencontrée.
